# EUROPEAN PATENT SPECIFICATION

(11) **EP 4 644 244 B1**
(45) Date of publication and mention of the grant of the patent: **04.11.2026**
(21) Application number: 24173070.4
(22) Date of filing: 29.04.2024
(51) Int. Cl.: B64D 11/02, B64D 11/00

(54) **LAVATORY ARRANGEMENT FOR AN AIRCRAFT CABIN**
TOILETTENANORDNUNG FÜR EINE FLUGZEUGKABINE
AGENCEMENT DE TOILETTES POUR CABINE D'AÉRONEF

(43) Date of publication of application: 05.11.2025
(73) Proprietor: AIRBUS Operations GmbH, 21129 Hamburg (DE)
(72) Inventor: Vötter, Axel, 21129 Hamburg (DE); Miles, Tjark, 21129 Hamburg (DE)
(74) Representative: LKGLOBAL Partnerschaftsgesellschaft mbB

(56) References cited:
- EP-A1- 2 974 960
- EP-A2- 2 708 467
- US-A1- 2014 291 446
- US-A1- 2015 136 903

## Description

### FIELD OF THE INVENTION

The present invention relates to a cabin for an aircraft with a lavatory arrangement, to an aircraft and to a method for transforming a lavatory arrangement for an aircraft cabin.

### BACKGROUND OF THE INVENTION

Lavatories for passengers are installed on board an aircraft to provide sanitary service functions to passengers. In view of space economic concerns, aircraft lavatories are small in order to have maximum space available for passenger seating. However, passengers with reduced mobility (PRMs), in particular when using a wheelchair, may require larger lavatory spaces. In WO 2011/101385 A2, a solution with a movable partition is provided. By moving the partition into an open position, two lavatories are combined to form one larger compartment that can then be used by a PRM. Further, WO 2012/110643 A1 provides a similar solution within a modular design. However, it has been shown that a demand for further improved spatial situations exists.

EP 2974960 A1, according to its abstract, describes a wheelchair-accessible aircraft lavatory unit being provided while ensuring the number of lavatories, thereby reducing the amount of space occupied by the aircraft lavatory unit within the aircraft. A movable wall section can be moved to a standard position to allow two lavatories to be used separately. The movable wall section can be moved to a non-standard position to join the two lavatories and establish a broad space in which a wheelchair can turn around within the aircraft lavatory unit. A large opening formed by connecting two openings can be formed in a front wall by moving the movable wall section to the non-standard position and opening doors of the lavatories which is advantageous in allowing for easy access to an aircraft lavatory unit.

Further, US 2014/0291446 A1, EP 2708467 A2 and US 2015/0136903 A1 describe lavatories with removable partition walls for the use of the lavatory by passengers in a wheelchair.

### SUMMARY OF THE INVENTION

There may thus be a need for lavatories with improved use of available space.

The object of the present invention is solved by the subject-matter of the independent claims; further embodiments are incorporated in the dependent claims. It should be noted that the following described aspects of the invention apply also for the aircraft cabin, for the cabin for an aircraft, for the aircraft and for the method for transforming a lavatory arrangement for an aircraft cabin.

According to the present invention, a cabin for an aircraft is provided. The cabin comprises at least one passenger seating zone with a plurality of passenger seats. The cabin also comprises at least one aisle zone for allowing movement of the passengers inside the cabin. The cabin further comprises at least one lavatory monument . The at least one lavatory monument comprises at least one lavatory arrangement. The arrangement comprises a first lavatory compartment accessible from an aisle area via a first door, and a second lavatory compartment accessible from the aisle area via a second door. A movable bi-functional partition wall is arranged between the first lavatory compartment and the second lavatory compartment. The bi-functional partition wall is movable between a primary position and a secondary position. In the primary position, the bi-functional partition wall separates the first lavatory compartment from the second lavatory compartment, and in the secondary position, the bi-functional partition wall is brought into a position outside the first and second lavatory compartments, in which secondary position the first lavatory compartment and the second lavatory compartment provide an enlarged common lavatory. In the secondary position, the bi-functional partition wall is arranged at least partly outside the lavatory arrangement and within the aisle area outside the first lavatory compartment and the second lavatory compartment.

As an effect, the lavatory space available inside is maximized.

According to the invention, in the secondary position, the partition wall is at least partly enclosing a part of the aisle area in front of the lavatory arrangement providing an additional separated space as an enlargement to the common lavatory.

According to an example, in the secondary position, the partition wall is arranged extending towards a monument provided on an opposite side of the aisle area such that an additional space is provided in front of the first or second door separated from an adjacent aisle or seating space, which additional space is provided as an enlargement to the common lavatory.

According to an example, the partition wall comprises a main wall panel and an extension segment on its distal edge to extend an effective length of the partition wall in the secondary position. The extension segment is movable from a stored position to an extended position. **In** a first option, the extension segment is a pivoting segment attached to the main panel pivotably around a vertical axis. **In** a second option, the extension segment is a translating segment attached to a distal front end of the main panel translatable in a telescoping manner.

According to an example, a movable bridging segment is provided on the monument provided on the opposite side of the aisle area. The bridging segment is movable between a parked position and a deployed position. The partition wall is connectable to the bridging segment when the partition wall is in its secondary position and the bridging segment is in its deployed position.

According to an example, the partition wall comprises at least two wall panel segments connected by a vertical hinge connection. In the secondary position, the partition wall is extracted from the arrangement and folded along the vertical hinge connection and attached with its distal end such that an enclosed supplemental space partition is provided in front of the first door or the second door, which supplemental space section is provided as an apsis-like enlargement to the common lavatory.

According to an example, the partition wall comprises at least two wall panel segments connected by a vertical hinge connection. In the secondary position, the partition wall is extracted from the arranged folded along the vertical hinge connection and attached with its distal end to a cabin wall structure arranged to the side of the first or the second lavatory such that a supplemental space section adjacent to the first or second door is provided, which supplemental space is provided as an enlargement to the common lavatory.

According to an example, in the secondary position, the partition wall is arranged extending from the lavatory arrangement to a monument provided on an opposite side of the aisle area. For achieving the secondary position, in the completely pulled out state the partition wall is movable with its proximal edge from a location between the first and the second door towards a location on the opposite side of the first and the second door. Further, in the secondary position, the partition wall is connected with its proximal end to a portion of the lavatory arrangement that is arranged on a lateral side of the first or the second door such that an enlarged additional space is provided in front of the first and second door separated from an adjacent aisle or seating space, which additional space is provided as an enlargement to the common lavatory.

According to an example, in the secondary position, the partition wall is arranged in front of the first or the second lavatory door. As an option, the partition wall comprises two segments that are foldable connected along a vertical axis to fold in front of the first or second door in the secondary position.

According to an example, the partition wall comprises extendable closure segments on its upper edge. The closure segments can be extracted in the secondary position to enclose the additional separated space towards above.

According to an example, the at least one aisle zone comprises at least one longitudinally arranged aisle. The first and second lavatory compartments are accessible from the aisle.

According to an example, an entry zone is provided to be arranged next to an aircraft door; the entry zone comprising an entry aisle area. The first and second lavatory compartments are accessible from the entry aisle area.

According to the present invention, also an aircraft is provided. The aircraft comprises a fuselage and a cabin space arranged within the fuselage. It is provided within the cabin space at a cabin according to one of the examples above.

According to the present invention, also a method for transforming a lavatory arrangement for an aircraft cabin is provided. The method comprises the following steps:
- Arranging a lavatory arrangement comprising a first lavatory compartment accessible from an aisle area via a first door, and a second lavatory compartment accessible from the aisle area via a second door; and
- Moving a bi-functional partition wall arranged between the first lavatory compartment and the second lavatory compartment from a primary position, in which the bi-functional partition wall separates the first lavatory compartment from the second lavatory compartment, to a secondary position; to move the partition wall, the wall is released and then moved to provide the enlarged lavatory, and further placed in the aisle area where the partition wall is fixed in the secondary position;
in the secondary position, the bi-functional partition wall is brought into a position outside the first and second lavatory compartments; in the secondary position, the first lavatory compartment and the second lavatory compartment provide an enlarged common lavatory; and in the secondary position, the bi-functional partition wall is arranged at least partly outside the lavatory arrangement and within the aisle area outside the first lavatory compartment and the second lavatory compartment to at least partly enclose a part of the aisle area in front of the lavatory arrangement providing an additional separated space as an enlargement to the common lavatory.

In an example, the step of moving the partition wall in the secondary position comprises at least partly enclosing a part of the aisle area in front of the lavatory arrangement providing an additional separated space as an enlargement to the common lavatory for the use by passengers with reduced mobility.

According to an aspect, the partition wall is a modifiable wall that acts as two different functions in two different locations.

According to an aspect, a double lavatory with two toilet spaces is provided that can be turned into an enlarged lavatory with an increased user space by moving a partition wall between the two toilet spaces outside the lavatory and enclosing an aisle space outside the lavatory to make this space usable as additional private user space. Thus, not only the space of the two toilet spaces is provided e.g. for use by passengers with reduced mobility, but further space is provided in addition.

According to an aspect, a partition wall is provided that allows to transform the two lavatory spaces, i.e. the two single toilet or lavatory compartments, into one enlarged common lavatory with increased available user space.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:

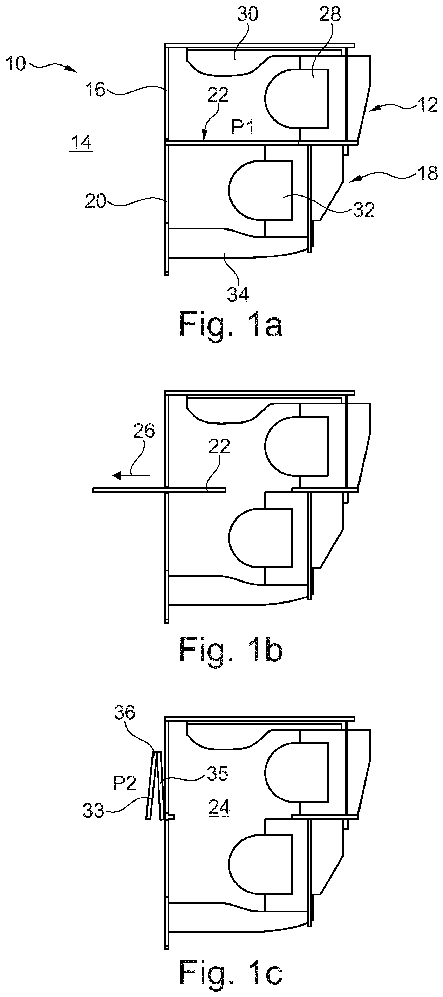

Fig. 1a schematically shows an example of a lavatory arrangement with a first and a second lavatory compartment and a movable partition wall in a first state in a horizontal plan; Fig. 1b shows the example of Fig. 1a in a state during movement of the partition wall; and Fig. 1c shows the example of Fig. 1a in a second state.

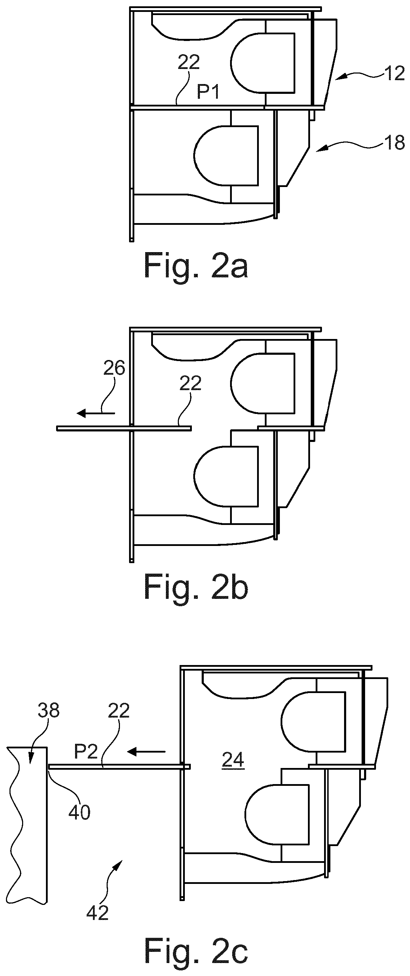

Fig. 2a shows a second example of a lavatory arrangement with a movable partition wall in a first state; Fig. 2b shows the example of Fig. 2a in a state during movement of the partition wall; and Fig. 2c shows the example of Fig. 2a in a second state providing an example of an enlargement to the common lavatory.

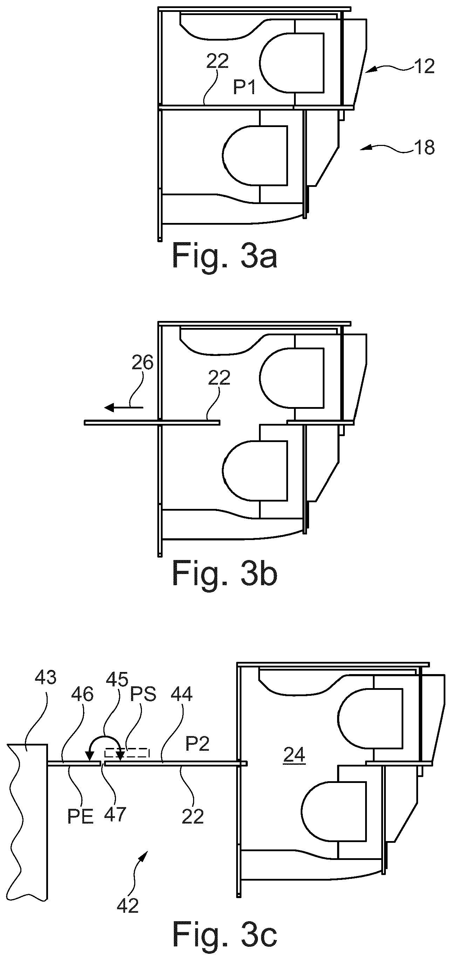

Fig. 3a shows a third example of a lavatory arrangement with a movable partition wall in a first state; Fig. 3b shows the example in a state during movement of the partition wall; and Fig. 3c shows the example in a second state providing another example of an enlargement to the common lavatory.

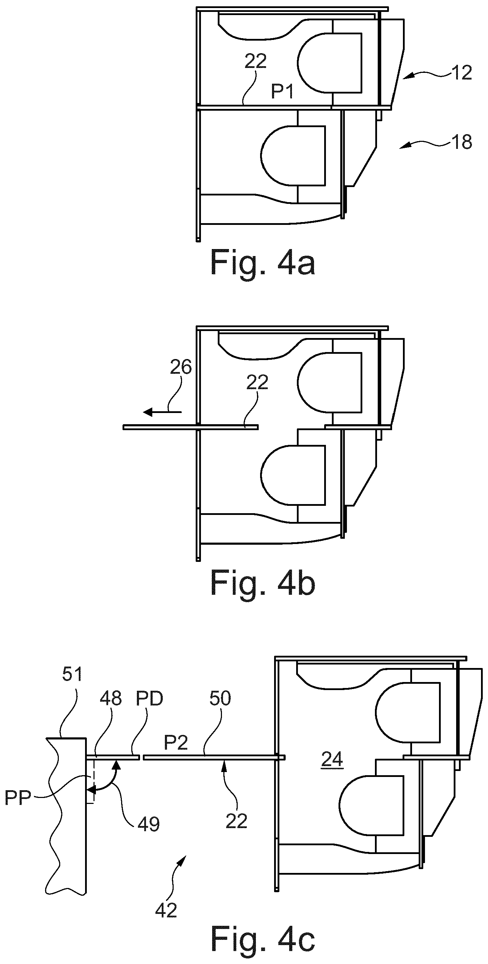

Fig. 4a shows a fourth example of a lavatory arrangement with a movable partition wall in a first state; Fig. 4b shows the example in a state during movement of the partition wall; and Fig. 4c shows the example in a second state providing a further example of an enlargement to the common lavatory.

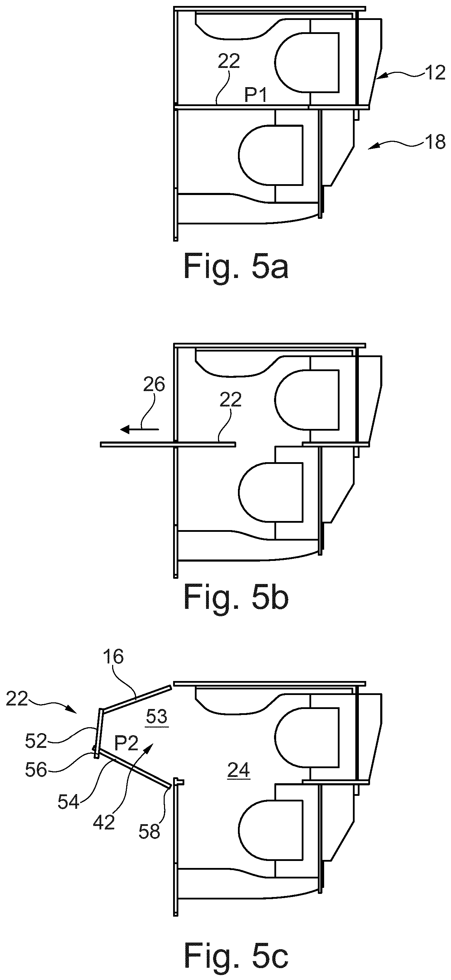

Fig. 5a shows a fifth example of a lavatory arrangement with a movable partition wall in a first state; Fig. 5b shows the example in a state during movement of the partition wall; and Fig. 5c shows the example in a second state providing a still further example of an enlargement to the common lavatory.

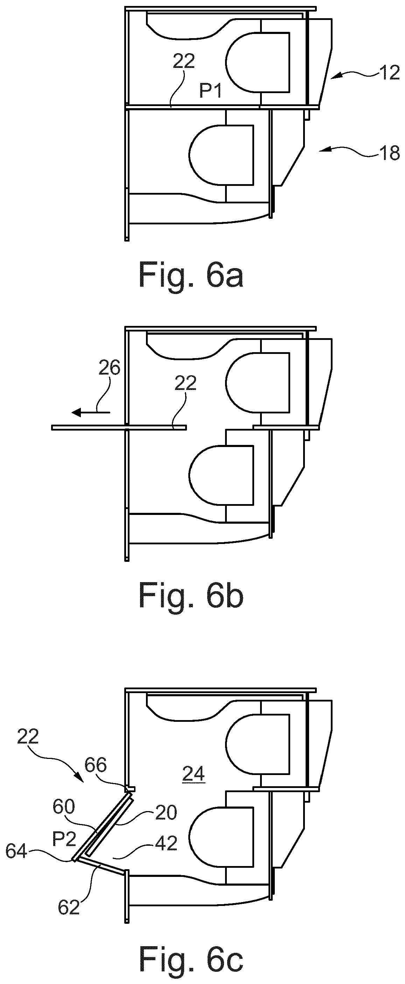

Fig. 6a shows a sixth example of a lavatory arrangement with a movable partition wall in a first state; Fig. 6b shows the example in a state during movement of the partition wall; and Fig. 6c shows the example in a second state providing still another example of an enlargement to the common lavatory.

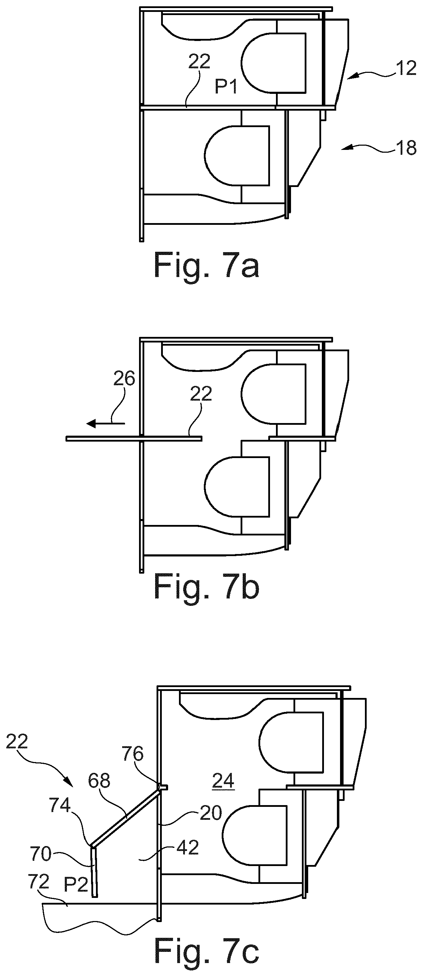

Fig. 7a shows a seventh example of a lavatory arrangement with a movable partition wall in a first state; Fig. 7b shows the example in a state during movement of the partition wall; and Fig. 7c shows the example in a second state providing a furthermore example of an enlargement to the common lavatory.

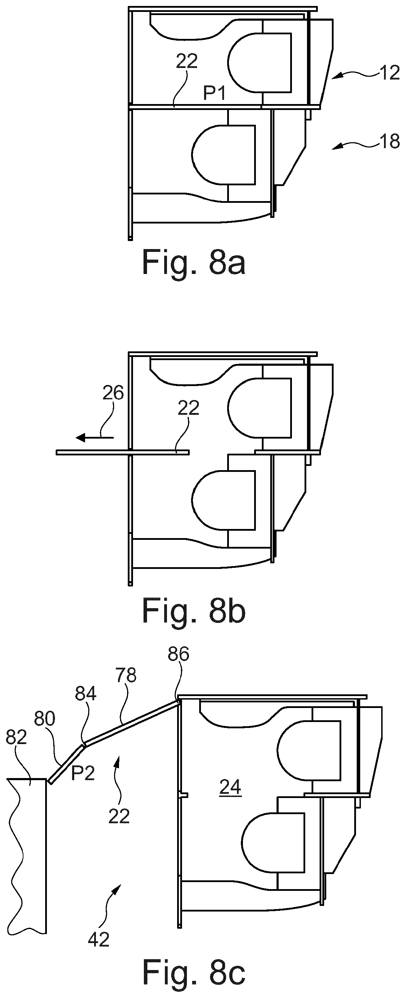

Fig. 8a shows an eighth example of a lavatory arrangement with a movable partition wall in a first state; Fig. 8b shows the example in a state during movement of the partition wall; and Fig. 8c shows the example in a second state providing an even further furthermore example of an enlargement to the common lavatory.

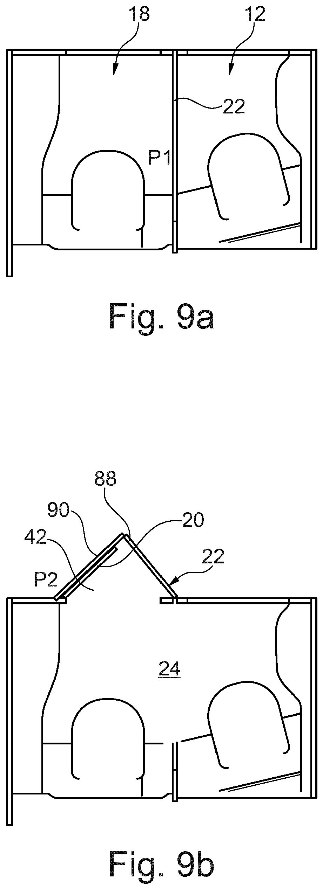

Fig. 9a shows a nineth example of a lavatory arrangement with a movable partition wall in a first state; and Fig. 9b shows the example in a second state providing an example of an enlargement to the common lavatory similar to the example of Figs. 6a/b.

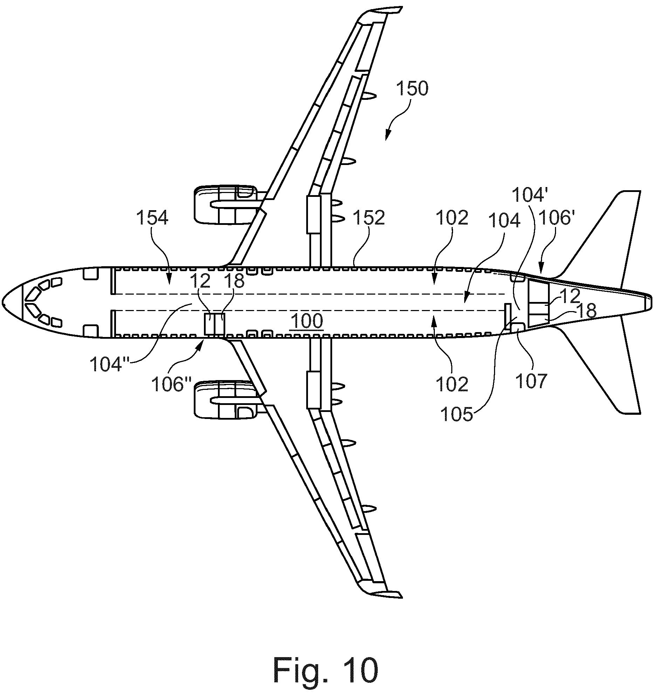

Fig. 10 shows an example of a cabin in an aircraft.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

Figs. 1a-1c schematically shows an example of a lavatory arrangement 10. The lavatory arrangement 10 comprises a first lavatory compartment 12 accessible from an aisle area 14 via a first door 16. The lavatory arrangement 10 also comprises a second lavatory compartment 18 accessible from the aisle area via a second door 20. A movable bi-functional partition wall 22 is arranged between the first lavatory compartment 12 and the second lavatory compartment 18. The bi-functional partition wall 22 is movable between a primary position P1 and a secondary position P2. In the primary position P1, the bi-functional partition wall 22 separates the first lavatory compartment 12 from the second lavatory compartment 18, and in the secondary position P2, the bi-functional partition wall 22 is brought into a position outside the first and second lavatory compartments 12, 18, in which secondary position P2 the first lavatory compartment 12 and the second lavatory compartment 18 provide an enlarged common lavatory 24. In the secondary position P2, the bi-functional partition wall 22 is arranged at least partly outside the lavatory arrangement 10 and within the aisle area 14 outside the first lavatory compartment 12 and the second lavatory compartment 18.

Fig. 1a shows the partition wall 22 in the primary position P1.

Fig. 1b shows the example of Fig. 1a in a state during movement of the partition wall 22. The movement, e.g. a translational movement followed by further movement, like pivoting, is indicated by an arrow 26.

Fig. 1c shows the example of Fig. 1a in the secondary position P2.

The fist lavatory compartment 12 has a first toilet 28 and a first sink 30 or washbasin. The second lavatory compartment 18 has a second toilet 32 and a second sink 34 or washbasin.

As an example, the enlarged common lavatory 24 is provided for the use by passengers with reduced mobility.

The term "lavatory compartment" relates to an enclosed space having installations of a lavatory such as a toilet, a urinal, a sink, a mirror or a waste bin. The lavatory compartment can also be referred to as lavatory, toilet room, restroom or passenger service room. The lavatory compartment can also be referred to as toilet space.

The term "aisle area" relates to parts of the cabin provided for access by passengers and crew, movement onboard of passengers and crew, movement of service units like trolleys for onboard service. The aisle area is usually adjacent to seating areas having passenger seats. The aisle area can also be referred to as corridor arrangement.

The term "partition wall" relates to a wall separating the spaces of the first lavatory compartment and the second lavatory compartment, i.e. of the first and second toilet spaces.

The term "bi-functional" relates to the wall being able to move between two positions fulfilling two different purposes.

The term "primary position" relates to a first or main position for the use of the lavatories. The primary position can also be referred to as the dual-toilet use position.

The term "secondary position" relates to a second or auxiliary position for the use of the lavatories. The secondary position can also be referred to as the PRM-toilet use position.

The term "common lavatory" relates to the enlarged toilet space in which both toilets are enclosed, but only one is actually usable.

The term "outside the lavatory arrangement" relates to the partition wall being moved out of the interior and in front of the housing of the lavatory arrangement.

In the secondary position, the bi-functional partition wall is brought into a position outside the lavatory arrangement.

The enlarged common lavatory is configured for the use of the lavatory by passengers with reduced mobility (PRM), e.g. passengers that are using a wheelchair. For the use of a lavatory by a PRM, a transfer from the wheelchair onto a toilet seat and from there back to the wheelchair must be possible. Besides additional handles and grip portions throughout the cabin, also more space must be provided for this use scenario. For the further use of a lavatory by a PRM, also space for a support person may be needed.

In order to save space, the lavatory compartments are configured for standard use, allowing minimal space occupying layouts. However, these are too small for use by PRMs. For providing larger lavatory compartments that are suitable for being used by PRMs, two lavatory compartments are combined by removing the partition wall. Instead of folding and storing the wall inside the lavatory, the wall is moved out of the lavatory compartment and fixed in a different position. Thus, the space available inside the lavatory compartment is maximized.

The enlarged common lavatory allows the use of a wheelchair. Further, also space for a support person is provided by the enlarged common lavatory.

In an option, at least one of the first and second lavatory compartments comprises a toilet.

In one example, the first lavatory compartment comprises a toilet; the second lavatory compartment may comprise another facility like a sink, a urinal, a table or the like.

In another example, the first lavatory compartment comprises a toilet and the second lavatory compartment also comprises a toilet.

In addition, the first or the second lavatory compartment or both the first lavatory compartment and the second lavatory compartment comprise a sink in addition. In an option, a urinal can be provided in addition to a toilet, in one or both of the first and second lavatory compartment.

In Figs. 1a-1c, the partition wall 22 is provided with a central hinge 36 such that it can be folded outside the lavatory compartments, as indicated in Fig. 1c.

In an option, shown in Figs. 1a-1c, in the secondary position P2, the partition wall 22 is arranged in front of the first or the second lavatory door 16, 20. As an option, the partition wall 22 comprises two segments 33, 35 that are foldable connected along a vertical axis 36 to fold in front of the first or second door 16, 20 in the secondary position P2.

For transforming from the first position into the second position, the partition wall is pulled out of the lavatory arrangement into the aisle space in front of the first and second door. The partition wall is either pulled out completely and then folded, or gradually folded, once the first segment has been pulled out. Once in the folded state, a fixation can be provided to secure the wall segments in the folded stated attached to the lavatory arrangement.

In an option, in the completely pulled out state, the partition wall maintains connected to the lavatory arrangement with its proximal end.

The term distal relates to the part of the partition wall that is moved out from the lavatory position first. The term proximal relates to the part of the partition wall that is moved out from the lavatory position last.

Instead of stowing the partition wall inside the lavatory monument, this variation aims to stow the partition wall outside the monument by sliding the wall outside and fold and stow it outside.

In an option, in the secondary position P2, the partition wall 22 is at least partly enclosing a part of the aisle area 14 in front of the lavatory arrangement 10 providing an additional separated space as an enlargement 42 (see the following examples) to the common lavatory 24.

As an example, the additional separated space is provided as an enlargement to the common lavatory for the use by passengers with reduced mobility.

The term "enlargement" relates to an added space portion increasing the available space.

The separated space is provided as a private space.

Instead of stowing the partition wall inside the lavatory monument, in this variation the slid out partition wall is fixed in a manner that it creates additional space for the PRM assist person.

The partition wall can also be referred to as separation wall or divider wall.

In an option, the partition wall is provided with a sliding mechanism inside the lavatory compartment and is pivotably supported outside the lavatory compartment.

As an example, the partition wall slides out of the lavatory and locks into adjacent module. This provides additional private space for PRM transfer.

In an example, the lavatory door opens to the outside, i.e. towards the aisle area.

As an option, the lavatory door opens such that in view of a possible emergency situation, the door does not open against a stream of evacuating passengers such that these run into the obstructing door. Rather, the door opens in direction of stream of passengers such that these would re-close the lavatory door.

In another example, the lavatory door is a folding door that folds within the door opening.

In a further example, the lavatory door opens to the inside, i.e. towards the lavatory compartment.

The term aisle area relates to space in the cabin used for passenger and crew movement in the cabin. The aisle area relates to the main aisles commonly arranged in longitudinal direction of an aircraft, for example one or two or more aisles separating the two or more seating zones. The aisle area also relates to the aisle sections in transverse direction, connecting different main aisles or providing access to the aircraft doors, to galley sections and lavatories, the cockpit door, and also internal staircases on board the aircraft.

Figs. 2a-2c show a second example of the lavatory arrangement 10 with the movable partition wall 22 in a first state. In the secondary position P2, the partition wall 22 is arranged extending towards a monument 38 provided on an opposite side of the aisle area, e.g. an entry/exit area in case of the lavatory arrangement being placed next to an aircraft door, such that the additional space 42 is provided in front of the first or second door separated from an adjacent aisle or seating space, which additional space 42 is provided as an enlargement to the common lavatory 24.

For example, the movable partition wall 22 is connected to the monument 38 by abutting against a respective abutting zone 40 at the monument 38.

Fig. 2a shows the partition wall 22 in the primary position P1.

Fig. 2b shows the example of Fig. 2a in a state during movement of the partition wall 22. The movement, e.g. a translational movement followed by further movement, like pivoting, is indicated by the arrow 26.

Fig. 2c shows the example of Fig. 2a in the secondary position P2.

For transforming from the first position P1 into the second position P2, the partition wall 22 is pulled out of the lavatory arrangement into the aisle space in front of the first and second door. In an option, the partition wall 22 is then connected to the monument provided on the opposite side of the aisle area.

In an option, the distal end of the partition wall 22 is temporarily fixable to the monument 38.

The monument can be a partition wall, a galley, a lavatory or a stowage space.

The partition wall 22 is transferred from the primary position P1 to the secondary position P2 in a translating movement.

In an option, the partition wall is provided as a rigid one-piece wall segment.

In an option, the partition wall is temporarily locked to the monument provided on the opposite side.

In an option, in the completely pulled out state, the partition wall maintains connected to the lavatory arrangement with its proximal end.

In an option, in the completely pulled out state, the partition wall maintains connected to the lavatory arrangement with its proximal end to a portion of the lavatory arrangement that is arranged between the first and the second door.

Figs. 3a-3c show a third example of the lavatory arrangement 10 with the movable partition 22 wall in a first state. The partition wall 22 comprises a main wall panel 44 and an extension segment 46 on its distal edge to extend an effective length of the partition wall in the secondary position P2. The extension segment 46 is movable from a stored position PS to an extended position PE. In a first option, the extension segment 46 is a pivoting segment attached to the main panel pivotably around a vertical axis 47. An arrow 45 indicates the pivoting movement. In a second option, the extension segment 46 is a translating segment attached to a distal front end of the main panel translatable in a telescoping manner (not shown).

In the secondary position P2, the partition wall 22 is arranged extending towards a monument 43 provided on an opposite side of the aisle area, e.g. an entry/exit area in case of the lavatory arrangement being placed next to an aircraft door, such that the additional space 42 is provided in front of the first or second door separated from an adjacent aisle or seating space, which additional space 42 is provided as an enlargement to the common lavatory 24.

The monument 43 can be a partition wall, a galley, a lavatory or a stowage space.

In an option, the distal end of the partition wall 22, e.g. the extension segment 46, is temporarily fixable to the monument 43.

Fig. 3a shows the partition wall 22 in the primary position P1.

Fig. 3b shows the example of Fig. 3a in a state during movement of the partition wall 22. The movement, e.g. a translational movement followed by further movement, like pivoting, is indicated by the arrow 26.

Fig. 3c shows the example of Fig. 3a in the secondary position P2.

The term "main wall panel" relates to the larger wall part forming the separation when in the primary position.

The term "extension segment" relates to a smaller wall part only used when in the secondary position. The extension segment so-to-speak increases the length of the partition wall.

The term "stored position" relates to a position when the panel is not used.

The term "extended position" relates to a position when the panel is used.

The term "pivoting" relates to a rotational movement around a vertical axis.

The term "translating" relates to a linear sliding movement.

For transforming from the first position into the second position, the partition wall is pulled out of the lavatory arrangement into the aisle space in front of the first and second door. The extension segment is then unfolded or extracted. In an option, the extension segment is then connected to the monument provided on the opposite side of the aisle area.

In an example, the pivoting segment is pivotable from the stored position to the extended position. In an option, a recess is provided in the main panel for at least partly accommodating the pivoting segment in the stored position.

In an example, the translating segment is translatable from the stored position to the extended position. In an option, a pocket is provided in the main panel for at least partly accommodating the pivoting segment in the stored position.

In an option, in the completely pulled out state, the partition wall maintains connected to the lavatory arrangement with its proximal end.

In an example, an additional flap is attached on the partition wall in order to cover more distance, if applicable.

In another option, the partition wall comprises a main wall panel with a reduction segment on its distal or proximal edge to reduce the effective length of the partition wall in the secondary position. The reduction segment is retractable from an extended partition position to a retracted position. The reduction segment is a pivoting segment attached to the main panel pivotably around a vertical axis, or a translating segment attached to a distal front end of the main panel translatable in a telescoping manner.

Figs. 4a-4c show a fourth example of the lavatory arrangement 10 with the movable partition wall 22. A movable bridging segment 48 is provided on a monument 51 provided on the opposite side of the aisle area, e.g. an entry/exit area in case of the lavatory arrangement being placed next to an aircraft door. The bridging segment 48 is movably attached to the monument 51. The bridging segment 48 is movable between a parked position PP and a deployed position PD., e.g. around a vertical pivoting axis. A second arrow 49 indicates the pivoting movement. The partition wall 22 is connectable to the bridging segment by its main panel 50 when the partition wall 22 is in its secondary position P2 and the bridging segment 48 is in its deployed position PD.

In the secondary position P2, the partition wall 22 is arranged extending towards the monument 51 such that the additional space 42 is provided in front of the first or second door separated from an adjacent aisle or seating space, which additional space 42 is provided as an enlargement to the common lavatory 24.

The monument 51 can be a partition wall, a galley, a lavatory or a stowage space.

In an option, the distal end of the partition wall 22 is temporarily fixable to the monument 51 via the bridging segment 48.

Fig. 4a shows the partition wall 22 in the primary position P1, in a first state.

Fig. 4b shows the example of Fig. 4a in a state during movement of the partition wall 22. The movement, e.g. a translational movement followed by further movement, like pivoting, is indicated by the arrow 26.

Fig. 4c shows the example of Fig. 4a in the secondary position P2.

The term "bridging segment" relates to a part of the wall that covers a gap between the partition wall and the opposite monument.

The term "parked position" relates to a position when the segment is not in use.

The term "deployed position" relates to a position when the segment is in use.

For transforming from the first position into the second position, the partition wall is pulled out of the lavatory arrangement into the aisle space in front of the first and second door. The extension segment is unfolded or extracted. This can take place at the same time or independent, e.g., before or after pulling out the partition wall. In an option, the extension segment and the partition wall are then connected to each other.

In an option, in the completely pulled out state, the partition wall maintains connected to the lavatory arrangement with its proximal end.

In an example, an additional flap is attached on adjacent module in order to cover more distance, if applicable.

Figs. 5a-5c show a fifth example of the lavatory arrangement 10 with the movable partition wall 22 in a first state. The partition wall 22 comprises at least two wall panel segments 52, 54 connected by a vertical hinge connection 56. In the secondary position P2, the partition wall 22 is extracted from the arrangement and folded along the vertical hinge connection 56 and attached with its distal end such that an enclosed supplemental space partition 53 is provided in front of the first door 16 or the second door 20, which supplemental space partition 53, also referred to as section, is provided as an added space-portion to the lavatory, i.e. the common lavatory 24 is provided with an additional extension. The supplemental space partition 53 can also be referred to as apsis-like enlargement to the common lavatory 24.

In the secondary position P2, the partition wall 22 is arranged such that the additional space 42 is provided in front of the first or second door separated from an adjacent aisle or seating space, which additional space 42 is provided as an enlargement to the common lavatory 24.

Fig. 5a shows the partition wall 22 in the primary position P1.

Fig. 5b shows the example of Fig. 5a in a state during movement of the partition wall 22. The movement, e.g. a translational movement followed by further movement, like pivoting, is indicated by the arrow 26.

Fig. 5c shows the example of Fig. 5a in the secondary position P2.

In an example, shown in Fig. 5c, also one of the two doors, in this case the first door 16, is used in combination with the wall panel segments 52, 54 to form the apsis-like enlargement.

In another example, not shown in Fig. 5c, the door is not used in combination with the wall panel segments 52, 54 to form the apsis-like enlargement, but the door is opened into the apsis-like enlargement (see Fig. 6c). The partition wall may have two or three segments or more segments to form an extension space.

The term "wall panel segments" relates to parts of the wall forming the partition wall.

The term "vertical hinge connection" relates to a connection allowing a movement around a vertical axis.

For transforming from the first position into the second position, the partition wall is pulled out of the lavatory arrangement into the aisle space in front of the first and second door. The partition wall is either pulled out completely and then folded, or gradually folded, once the first segment has been pulled out.

In the primary position, the two wall panel segments of the partition wall are arranged in a straightened-out manner forming a straight wall panel. In the secondary position, the two wall panel segments of the partition wall are arranged in an inclined or folded manner forming an angled or folded wall panel.

The door can open into the apsis-like enlargement to be arranged parallel to one of the wall panel segments.

Figs. 6a-6c show a sixth example of the lavatory arrangement 10 with the movable partition wall 22. In an example, in the second position P2, the partition wall 22 is arranged in front of and adjacent to one of the first and the second door that is hinged on its vertical lateral edge closer to the other one of the first and the second door, i.e. the door leaf is pivotably mounted by hinges on its lateral side facing the other door. The partition wall comprises two wall panel segments 60, 62, e.g. connected via a vertical hinge 64, and mounted to the lavatory structure by vertical hinge 66. When in the second position, the proximal wall segment has a horizontal width spanning at least the width of the door 20 in front of which it is arranged. The distal wall segment can have a smaller or larger width. The proximal wall segment is arranged with the proximal lateral vertical edge to the lavatory arrangement and movably held by the lavatory arrangement. The distal wall segment is connected with its proximal lateral vertical edge to the distal lateral vertical edge of the proximal wall segment. The distal wall segment is fixed to the lavatory arrangement with its distal lateral vertical edge.

In the secondary position P2, the partition wall 22 is arranged such that the additional space 42 is provided in front of the first or second door separated from an adjacent aisle or seating space, which additional space 42 is provided as an enlargement to the common lavatory 24.

Fig. 6a shows the partition wall 22 in the primary position P1.

Fig. 6b shows the example of Fig. 6a in a state during movement of the partition wall 22. The movement, e.g. a translational movement followed by further movement, like pivoting, is indicated by the arrow 26.

Fig. 6c shows the example of Fig. 6a in the secondary position P2.

In another example, the partition wall comprises three wall panel segments, a proximal wall segment, a distal wall segment and a middle wall segment arranged between the proximal wall segment and the distal wall segment.

In an option, in the completely pulled out state, the partition wall maintains connected to the lavatory arrangement with its proximal end.

In an example, the partition wall slides out of the lavatory, folds and locks into lavatory door frame, in order to create additional space for assist person during PRM transfer.

In another example, the partition wall slides out of the lavatory, folds and locks into aircraft lining, in order to create additional space for assist person during PRM transfer.

Figs. 7a-7c show a seventh example of the lavatory arrangement 10 with the movable partition wall 22 in a first state. The partition wall 22 comprises at least two wall panel segments 68, 70 connected by a vertical hinge connection 74. In the secondary position P2, the partition wall 22 is extracted from the arrangement and folded along the vertical hinge connection and attached with its distal end to a cabin wall structure 72 or aircraft door arranged to the side of the first or the second lavatory such that a supplemental space section adjacent to the first or second door is provided, which supplemental space section is provided as an enlargement to the common lavatory 24.

In an example, instead of the cabin wall structure 72 or the aircraft door, a monument is provided and the partition wall 22 folds against the monument, which can be a partition wall, a galley, a lavatory or a stowage space.

In the secondary position P2, the partition wall 22 is arranged such that the additional space 42 is provided in front of the first or second door separated from an adjacent aisle or seating space, which additional space 42 is provided as an enlargement to the common lavatory 24.

The door 20 can open into the additional space 42.

Fig. 7a shows the partition wall 22 in the primary position P1.

Fig. 7b shows the example of Fig. 7a in a state during movement of the partition wall 22. The movement, e.g. a translational movement followed by further movement, like pivoting, is indicated by the arrow 26.

Fig. 7c shows the example of Fig. 7a in the secondary position P2.

The door can open into the enlargement to the common lavatory to be arranged parallel to one of the wall panel segments.

In an option, in the completely pulled out state, the partition wall maintains connected to the lavatory arrangement with its proximal end.

In an example, the opened partition wall is slided, folded and locked into lavatory door frame. The partition wall slides out of the lavatory, folds and locks into lavatory door frame, in order to create additional space for assist person during PRM transfer.

Figs. 8a-8c show an eighth example of the lavatory arrangement 10 with the movable partition wall 22 in a first state. In the secondary position P2, the partition wall 22 is arranged extending from the lavatory arrangement 10 to a monument 82 provided on an opposite side of the aisle area. For achieving the secondary position P2, in the completely pulled out state the partition wall 22 is movable with its proximal edge from a location between the first and the second door 16, 20 towards a location on the opposite side of the first and the second door. In the secondary position P2, the partition wall 22 is connected with its proximal end to a portion of the lavatory arrangement 10 that is arranged on a lateral side of the first or the second door such that an enlarged additional space is provided in front of the first and second door 16, 20 separated from an adjacent aisle or seating space, which additional space is provided as an enlargement to the common lavatory 24. The partition wall 22 has a first panel 78 and a second panel 80 bridging to a monument 82, for example, an edge or side of the monument 82. The two panels are connected via a hinge 84.

In the secondary position P2, the partition wall 22 is arranged such that the additional space 42 is provided in front of the first or second door separated from an adjacent aisle or seating space, which additional space 42 is provided as an enlargement to the common lavatory 24.

The monument 43 can be a partition wall, a galley, a lavatory or a stowage space.

Fig. 8a shows the partition wall 22 in the primary position P1.

Fig. 8b shows the example of Fig. 8a in a state during movement of the partition wall 22. The movement, e.g. a translational movement followed by further movement, like pivoting, is indicated by the arrow 26.

Fig. 8c shows the example of Fig. 8a in the secondary position P2.

The lateral side of the first or the second door relates to a location that is on a side of the door that is opposite to a location between the two doors.

In an option, in the completely pulled out state, the partition wall maintains connected to the lavatory arrangement with its proximal end to a portion of the lavatory arrangement that is arranged between the first and the second door.

Instead of stowing the partition wall inside the lavatory monument, in this variation the slid out partition wall is removed and fixed in a manner that it creates additional space for the PRM assist person.

In an example, the partition wall slides out of the lavatory, folds and locks into A/C lining, in order to create additional space for assist person during PRM transfer.

In an option, not shown, the partition wall 22 comprises extendable closure segments on its upper edge; the closure segments can be extracted in the secondary position to enclose the additional separated space towards above.

The additional separated space can be provided as rigid flaps bridging the gap between the partition wall and the lavatory compartment housing structure or soft fabric-type cover segments spanning from partition wall and the lavatory compartment housing structure.

Fig. 9a shows a nineth example of a lavatory arrangement with the movable partition wall 22 in a first state, i.e. in the primary position P1.

Fig. 9b shows the example in a second state providing an example of an enlargement to the common lavatory similar to the example of Figs. 6a/b with the movable partition wall 22 in the secondary position P2. The movable partition wall 22 comprises two panels 88, 90, connected via a hinge. The door leaf of the door 20 can open into the space provided by the movable partition wall 22.

In the secondary position P2, the partition wall 22 is arranged such that the additional space 42 is provided in front of the first or second door separated from an adjacent aisle or seating space, which additional space 42 is provided as an enlargement to the common lavatory 24.

Fig. 10 shows an example of a cabin 100 in an aircraft. The cabin 100 comprises at least one passenger seating zone 102 with a plurality of passenger seats. The cabin 100 also comprises at least one aisle zone 104 for allowing movement of the passengers inside the cabin. The cabin 100 further comprises at least one lavatory monument

The lavatory monument relates to a monument providing sanitary service functions. The lavatory monument accommodates one or several lavatory compartments. In the present example, at least two lavatory compartments are provided. The lavatory monument can also be referred to as lavatory module lavatory unit or lavatory.

In an option, an entry zone 105 is provided to be arranged next to an aircraft door 107, the entry zone comprising an entry aisle area 104'. The first and second lavatory compartments 12, 18 are accessible from the entry aisle area. As an example, a first lavatory monument 06' is provided in the rear end, e.g. near the bulkhead.

In an option, the at least one aisle zone 104 comprises at least one longitudinally arranged aisle 104'. The first and second lavatory compartments 12, 18 are accessible from the aisle 104'. As another example, a second lavatory monument 106'' is provided along the aisle. The at least one lavatory monument 106 comprises at least one example of the lavatory arrangement 10 according to one of the examples above.

The term "passenger seating zone" relates to the parts of the cabin in which seats are provided for passengers.

The term "aisle zone" relates to the parts of the cabin that act as corridors for movement onboard the aircraft.

The term "lavatory monument " relates to monuments and other arrangements in the cabin providing the restroom functions onboard the aircraft.

Fig. 10 also shows an example of an aircraft 150 comprising a fuselage 152 and a cabin space 154 arranged within the fuselage 152. Within the cabin space, in a first option, it is provided at least one lavatory arrangement according to one of the examples above. Within the cabin space, in a second option, in addition or alternatively, it is provided a cabin according to one of the examples above.

It has to be noted that embodiments of the invention are described with reference to different subject matters. In particular, some embodiments are described with reference to method type claims whereas other embodiments are described with reference to the device type claims.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art remaining within the scope of the appended claims.

In the claims, the word "comprising" does not exclude other elements or steps, and the indefinite article "a" or "an" does not exclude a plurality. A single processor or other unit may fulfil the functions of several items re-cited in the claims. Any reference signs in the claims should not be construed as limiting the scope.

## Claims

1. A cabin (100) for an aircraft, the cabin comprising:
- at least one passenger seating zone (102) with a plurality of passenger seats;
- at least one aisle zone (104) for allowing movement of the passengers inside the cabin; and
- at least one lavatory monument (106', 106'');
wherein the at least one lavatory monument comprises at least one lavatory arrangement (10) comprising:
- a first lavatory compartment (12) accessible from an aisle area (14) via a first door (16);
- a second lavatory compartment (18) accessible from the aisle area via a second door (20);
wherein a movable bi-functional partition wall (22) is arranged between the first lavatory compartment and the second lavatory compartment;
wherein the bi-functional partition wall is movable between a primary position (P1) and a secondary position (P2); wherein in the primary position, the bi-functional partition wall separates the first lavatory compartment from the second lavatory compartment, and in the secondary position, the bi-functional partition wall is brought into a position outside the first and second lavatory compartments, in which secondary position the first lavatory compartment and the second lavatory compartment provide an enlarged common lavatory;
wherein in the secondary position, the bi-functional partition wall is arranged at least partly outside the lavatory arrangement and within the aisle area outside the first lavatory compartment and the second lavatory compartment; and
**characterised in that**, in the secondary position, the bi-functional partition wall is at least partly enclosing a part of the aisle area in front of the lavatory arrangement providing an additional separated space as an enlargement (42) to the common lavatory.

2. Cabin according to claim 1, wherein, in the secondary position, the partition wall is arranged extending towards a monument (38) provided on an opposite side of the aisle area such that an additional space (42) is provided in front of the first or second door separated from an adjacent aisle or seating space, which additional space is provided as an enlargement to the common lavatory.

3. Cabin according to claim 1 or 2, wherein the partition wall comprises a main wall panel (44) and an extension segment (46) on its distal edge to extend an effective length of the partition wall in the secondary position;
wherein the extension segment is movable from a stored position (PS) to an extended position (PE); and
wherein the extension segment is:
- a pivoting segment attached to the main panel pivotably around a vertical axis; or
- a translating segment attached to a distal front end of the main panel translatable in a telescoping manner.

4. Cabin according to claim 1 or 2, wherein a movable bridging segment (48) is provided on the monument provided on the opposite side of the aisle area;
wherein the bridging segment is movable between a parked position (PP) and a deployed position (PD); and
wherein the partition wall is connectable to the bridging segment when the partition wall is in its secondary position and the bridging segment is in its deployed position.

5. Cabin according to claim 1 or 2, wherein the partition wall comprises at least two wall panel segments (52, 54) connected by a vertical hinge connection (56); and
wherein, in the secondary position, the partition wall is extracted from the arrangement and folded along the vertical hinge connection and attached with its distal end such that an enclosed supplemental space partition (53) is provided in front of the first door or the second door, which supplemental space section is provided as an apsis-like enlargement to the common lavatory.

6. Cabin according to claim 1 or 2, wherein the partition wall comprises at least two wall panel segments (68, 70) connected by a vertical hinge connection (74);
wherein, in the secondary position, the partition wall is extracted from the arranged folded along the vertical hinge connection and attached with its distal end to a cabin wall structure arranged to the side of the first or the second lavatory such that a supplemental space section adjacent to the first or second door is provided, which supplemental space is provided as an enlargement to the common lavatory.

7. Cabin according to claim 1 or 2, wherein, in the secondary position, the partition wall is arranged extending from the lavatory arrangement to a monument provided on an opposite side of the aisle area;
wherein, for achieving the secondary position, in the completely pulled out state the partition wall is movable with its proximal edge from a location between the first and the second door towards a location on the opposite side of the first and the second door; and
wherein, in the secondary position, the partition wall is connected with its proximal end to a portion of the lavatory arrangement that is arranged on a lateral side of the first or the second door such that an enlarged additional space (42) is provided in front of the first and second door separated from an adjacent aisle or seating space, which additional space is provided as an enlargement to the common lavatory.

8. Cabin according to claim 1, wherein, in the secondary position, the partition wall is arranged in front of the first or the second lavatory door; and
wherein, preferably, the partition wall comprises two segments (33, 35) that are foldable connected along a vertical axis (36) to fold in front of the first or second door in the secondary position.

9. Cabin according to one of the preceding claims, wherein the partition wall comprises extendable closure segments on its upper edge; wherein the closure segments can be extracted in the secondary position to enclose the additional separated space towards above.

10. Cabin according to one of the preceding claims, wherein the at least one aisle zone comprises at least one longitudinally arranged aisle; and
wherein the first and second lavatory compartments are accessible from the aisle.

11. Cabin according to one of the preceding claims, wherein an entry zone is provided to be arranged next to an aircraft door; the entry zone comprising an entry aisle area; and
wherein the first and second lavatory compartments are accessible from the entry aisle area.

12. An aircraft (150), comprising:
- a fuselage (152); and
- a cabin space (154) arranged within the fuselage;
wherein it is provided within the cabin space a cabin according to one of the preceding claims.

13. A method (200) for transforming a lavatory arrangement for an aircraft cabin, comprising the following steps:
- arranging (202) a lavatory arrangement comprising a first lavatory compartment accessible from an aisle area via a first door, and a second lavatory compartment accessible from the aisle area via a second door; and
- moving (204) a bi-functional partition wall arranged between the first lavatory compartment and the second lavatory compartment from a primary position, in which the bi-functional partition wall separates the first lavatory compartment from the second lavatory compartment, to a secondary position; wherein, to move the bi-functional partition wall, the bi-functional partition wall is released and then moved to provide the enlarged lavatory, and further placed in the aisle area where the partition wall is fixed in the secondary position;
wherein in the secondary position, the bi-functional partition wall is brought into a position outside the first and second lavatory compartments; wherein, in the secondary position, the first lavatory compartment and the second lavatory compartment provide an enlarged common lavatory; and wherein in the secondary position, the bi-functional partition wall is arranged at least partly outside the lavatory arrangement and within the aisle area outside the first lavatory compartment and the second lavatory compartment to at least partly enclose a part of the aisle area in front of the lavatory arrangement providing an additional separated space as an enlargement to the common lavatory.

## Patentansprüche

1. Kabine (100) für ein Flugzeug, wobei die Kabine Folgendes umfasst:
- mindestens eine Passagiersitzzone (102) mit einer Vielzahl von Passagiersitzen;
- mindestens eine Gangzone (104) zum Ermöglichen einer Bewegung der Passagiere innerhalb der Kabine; und
- mindestens ein Toilettenmonument (106, 106');
wobei das mindestens eine Toilettenmonument mindestens eine Toilettenanordnung (10) umfasst, die Folgendes umfasst:
- einen ersten Toilettenraum (12), der von einem Gangbereich (14) aus über eine erste Tür (16) zugänglich ist;
- einen zweiten Toilettenraum (18), der von dem Gangbereich aus über eine zweite Tür (20) zugänglich ist;
wobei eine bewegliche bifunktionale Trennwand (22) zwischen dem ersten Toilettenraum und dem zweiten Toilettenraum angeordnet ist;
wobei die bifunktionale Trennwand zwischen einer Primärstellung (P1) und einer Sekundärstellung (P2) bewegbar ist; wobei die bifunktionale Trennwand in der Primärstellung den ersten Toilettenraum von dem zweiten Toilettenraum trennt und die bifunktionale Trennwand in der Sekundärstellung in eine Stellung außerhalb des ersten und zweiten Toilettenraums gebracht ist, in welcher Sekundärstellung der erste Toilettenraum und der zweite Toilettenraum eine vergrößerte gemeinsame Toilette bereitstellen;
wobei die bifunktionale Trennwand in der Sekundärstellung zumindest teilweise außerhalb der Toilettenanordnung und innerhalb des Gangbereichs außerhalb des ersten Toilettenraums und des zweiten Toilettenraums angeordnet ist; und
**dadurch gekennzeichnet, dass**
die bifunktionale Trennwand in der Sekundärstellung zumindest teilweise einen Teil des Gangbereichs vor der Toilettenanordnung umschließt, wodurch ein zusätzlicher abgetrennter Raum als eine Vergrößerung (42) der gemeinsamen Toilette bereitgestellt wird.

2. Kabine nach Anspruch 1, wobei die Trennwand in der Sekundärstellung so angeordnet ist, dass sie sich in Richtung eines Monuments (38) erstreckt, das auf einer gegenüberliegenden Seite des Gangbereichs vorgesehen ist, sodass ein zusätzlicher Raum (42) vor der ersten oder zweiten Tür abgetrennt von einem angrenzenden Gang- oder Sitzraum bereitgestellt wird, welcher zusätzliche Raum als eine Vergrößerung der gemeinsamen Toilette bereitgestellt wird.

3. Kabine nach Anspruch 1 oder 2, wobei die Trennwand ein Hauptwandpaneel (44) und ein Verlängerungssegment (46) an ihrer distalen Kante umfasst, um eine effektive Länge der Trennwand in der Sekundärstellung zu verlängern;
wobei das Verlängerungssegment von einer Verstauungsstellung (PS) in eine ausgefahrene Stellung (PE) bewegbar ist; und
wobei das Verlängerungssegment Folgendes ist:
- ein Schwenksegment, das an dem Hauptpaneel um eine vertikale Achse schwenkbar angebracht ist; oder
- ein Translationssegment, das an einem distalen vorderen Ende des Hauptpaneels teleskopierbar angebracht ist.

4. Kabine nach Anspruch 1 oder 2, wobei ein bewegliches Überbrückungssegment (48) an dem Monument vorgesehen ist, das auf der gegenüberliegenden Seite des Gangbereichs vorgesehen ist;
wobei das Überbrückungssegment zwischen einer Parkstellung (PP) und einer Einsatzstellung (PD) bewegbar ist; und
wobei die Trennwand mit dem Überbrückungssegment verbindbar ist, wenn sich die Trennwand in ihrer Sekundärstellung befindet und sich das Überbrückungssegment in seiner Einsatzstellung befindet.

5. Kabine nach Anspruch 1 oder 2, wobei die Trennwand mindestens zwei Wandpaneelsegmente (52, 54) umfasst, die durch eine vertikale Scharnierverbindung (56) verbunden sind; und
wobei die Trennwand in der Sekundärstellung aus der Anordnung herausgezogen und entlang der vertikalen Scharnierverbindung gefaltet und mit ihrem distalen Ende derart angebracht ist, dass ein umschlossener zusätzlicher Raumabschnitt (53) vor der ersten Tür oder der zweiten Tür bereitgestellt wird, welcher zusätzliche Raumabschnitt als eine apsisartige Vergrößerung der gemeinsamen Toilette bereitgestellt wird.

6. Kabine nach Anspruch 1 oder 2, wobei die Trennwand mindestens zwei Wandpaneelsegmente (68, 70) umfasst, die durch eine vertikale Scharnierverbindung (74) verbunden sind;
wobei die Trennwand in der Sekundärstellung aus der Anordnung herausgezogen, entlang der vertikalen Scharnierverbindung gefaltet und mit ihrem distalen Ende an einer Kabinenwandstruktur angebracht ist, die seitlich der ersten oder der zweiten Toilette angeordnet ist, sodass ein zusätzlicher Raumabschnitt angrenzend an die erste oder zweite Tür bereitgestellt wird, welcher zusätzliche Raum als eine Vergrößerung der gemeinsamen Toilette bereitgestellt wird.

7. Kabine nach Anspruch 1 oder 2, wobei die Trennwand in der Sekundärstellung so angeordnet ist, dass sie sich von der Toilettenanordnung zu einem Monument erstreckt, das auf einer gegenüberliegenden Seite des Gangbereichs vorgesehen ist;
wobei zum Erreichen der Sekundärstellung im vollständig herausgezogenen Zustand die Trennwand mit ihrer proximalen Kante von einer Stelle zwischen der ersten und der zweiten Tür in Richtung einer Stelle auf der gegenüberliegenden Seite der ersten und der zweiten Tür bewegbar ist; und
wobei die Trennwand in der Sekundärstellung mit ihrem proximalen Ende mit einem Abschnitt der Toilettenanordnung verbunden ist, der auf einer lateralen Seite der ersten oder der zweiten Tür angeordnet ist, sodass ein vergrößerter zusätzlicher Raum (42) vor der ersten und zweiten Tür abgetrennt von einem angrenzenden Gang- oder Sitzraum bereitgestellt wird, welcher zusätzliche Raum als eine Vergrößerung der gemeinsamen Toilette bereitgestellt wird.

8. Kabine nach Anspruch 1, wobei die Trennwand in der Sekundärstellung vor der ersten oder der zweiten Toilettentür angeordnet ist; und
wobei die Trennwand vorzugsweise zwei Segmente (33, 35) umfasst, die entlang einer vertikalen Achse (36) faltbar verbunden sind, um sich in der Sekundärstellung vor der ersten oder zweiten Tür zu falten.

9. Kabine nach einem der vorhergehenden Ansprüche, wobei die Trennwand ausziehbare Verschlussegmente an ihrer obersten Kante umfasst; wobei die Verschlussegmente in der Sekundärstellung herausgezogen werden können, um den zusätzlichen abgetrennten Raum nach oben zu umschließen.

10. Kabine nach einem der vorhergehenden Ansprüche, wobei die mindestens eine Gangzone mindestens einen Längsgang umfasst; und
wobei der erste und der zweite Toilettenraum von dem Gang aus zugänglich sind.

11. Kabine nach einem der vorhergehenden Ansprüche, wobei eine Einstiegszone vorgesehen ist, die neben einer Flugzeugtür anzuordnen ist; wobei die Einstiegszone einen Einstiegsgangbereich umfasst; und
wobei der erste und der zweite Toilettenraum von dem Einstiegsgangbereich aus zugänglich sind.

12. Flugzeug (150), umfassend:
- einen Rumpf (152); und
- einen Kabinenraum (154), der innerhalb des Rumpfes angeordnet ist;
wobei innerhalb des Kabinenraums eine Kabine nach einem der vorhergehenden Ansprüche vorgesehen ist.

13. Verfahren (200) zum Umwandeln einer Toilettenanordnung für eine Flugzeugkabine, umfassend die folgenden Schritte:
- Anordnen (202) einer Toilettenanordnung, die einen ersten Toilettenraum, der von einem Gangbereich aus über eine erste Tür zugänglich ist, und einen zweiten Toilettenraum umfasst, der von dem Gangbereich aus über eine zweite Tür zugänglich ist; und
- Bewegen (204) einer zwischen dem ersten Toilettenraum und dem zweiten Toilettenraum angeordneten bifunktionalen Trennwand von einer Primärstellung, in der die bifunktionale Trennwand den ersten Toilettenraum von dem zweiten Toilettenraum trennt, in eine Sekundärstellung; wobei zum Bewegen der bifunktionalen Trennwand die bifunktionale Trennwand entriegelt und dann bewegt wird, um die vergrößerte Toilette bereitzustellen, und ferner in dem Gangbereich platziert wird, wo die Trennwand in der Sekundärstellung fixiert wird; wobei die bifunktionale Trennwand in der Sekundärstellung in eine Stellung außerhalb des ersten und zweiten Toilettenraums gebracht wird; wobei in der Sekundärstellung der erste Toilettenraum und der zweite Toilettenraum eine vergrößerte gemeinsame Toilette bereitstellen; und wobei die bifunktionale Trennwand in der Sekundärstellung zumindest teilweise außerhalb der Toilettenanordnung und innerhalb des Gangbereichs außerhalb des ersten Toilettenraums und des zweiten Toilettenraums angeordnet wird, um zumindest teilweise einen Teil des Gangbereichs vor der Toilettenanordnung zu umschließen, wodurch ein zusätzlicher abgetrennter Raum als eine Vergrößerung der gemeinsamen Toilette bereitgestellt wird.

## Revendications

1. Cabine (100) pour un aéronef, la cabine comprenant:
- au moins une zone de sièges passagers (102) avec une pluralité de sièges passagers;
- au moins une zone de couloir (104) pour permettre le déplacement des passagers à l'intérieur de la cabine; et
- au moins un monument de toilettes (106, 106');
dans laquelle l'au moins un monument de toilettes comprend au moins un agencement de toilettes (10) comprenant:
- un premier compartiment de toilettes (12) accessible depuis une zone de couloir (14) via une première porte (16);
- un second compartiment de toilettes (18) accessible depuis la zone de couloir via une seconde porte (20);
dans laquelle une paroi de séparation bifonctionnelle mobile (22) est disposée entre le premier compartiment de toilettes et le second compartiment de toilettes;
dans laquelle la paroi de séparation bifonctionnelle est mobile entre une position primaire (P1) et une position secondaire (P2); dans laquelle, dans la position primaire, la paroi de séparation bifonctionnelle sépare le premier compartiment de toilettes du second compartiment de toilettes, et dans la position secondaire, la paroi de séparation bifonctionnelle est amenée dans une position à l'extérieur des premier et second compartiments de toilettes, position secondaire dans laquelle le premier compartiment de toilettes et le second compartiment de toilettes fournissent une toilette commune agrandie;
dans laquelle, dans la position secondaire, la paroi de séparation bifonctionnelle est disposée au moins partiellement à l'extérieur de l'agencement de toilettes et à l'intérieur de la zone de couloir à l'extérieur du premier compartiment de toilettes et du second compartiment de toilettes; et
**caractérisée en ce que**, dans la position secondaire, la paroi de séparation bifonctionnelle entoure au moins partiellement une partie de la zone de couloir devant l'agencement de toilettes, fournissant un espace séparé supplémentaire formant un agrandissement (42) de la toilette commune.

2. Cabine selon la revendication 1, dans laquelle, dans la position secondaire, la paroi de séparation est disposée s'étendant vers un monument (38) prévu sur un côté opposé de la zone de couloir de sorte qu'un espace supplémentaire (42) est fourni devant la première ou la seconde porte, séparé d'un couloir ou d'un espace de sièges adjacent, lequel espace supplémentaire est fourni sous forme d'un agrandissement de la toilette commune.

3. Cabine selon la revendication 1 ou 2, dans laquelle la paroi de séparation comprend un panneau de paroi principal (44) et un segment d'extension (46) sur son bord distal pour étendre une longueur effective de la paroi de séparation dans la position secondaire;
dans laquelle le segment d'extension est mobile d'une position rangée (PS) à une position déployée (PE); et
dans laquelle le segment d'extension est:
- un segment pivotant fixé au panneau principal de manière pivotante autour d'un axe vertical; ou
- un segment de translation fixé à une extrémité avant distale du panneau principal, translatable de manière télescopique.

4. Cabine selon la revendication 1 ou 2, dans laquelle un segment de pontage mobile (48) est prévu sur le monument situé du côté opposé de la zone de couloir;
dans lequel le segment de pontage est mobile entre une position de parcage (PP) et une position déployée (PD); et
dans laquelle la paroi de séparation peut être reliée au segment de pontage lorsque la paroi de séparation est dans sa position secondaire et que le segment de pontage est dans sa position déployée.

5. Cabine selon la revendication 1 ou 2, dans laquelle la paroi de séparation comprend au moins deux segments de panneau de paroi (52, 54) reliés par une liaison à charnière verticale (56); et
dans laquelle, dans la position secondaire, la paroi de séparation est extraite de l'agencement et pliée le long de la liaison à charnière verticale et fixée par son extrémité distale de sorte qu'une section d'espace supplémentaire fermée (53) est fournie devant la première porte ou la seconde porte, laquelle section d'espace supplémentaire est fournie sous forme d'un agrandissement en forme d'abside de la toilette commune.

6. Cabine selon la revendication 1 ou 2, dans laquelle la paroi de séparation comprend au moins deux segments de panneau de paroi (68, 70) reliés par une liaison à charnière verticale (74);
dans laquelle, dans la position secondaire, la paroi de séparation est extraite de l'agencement, pliée le long de la liaison à charnière verticale et fixée par son extrémité distale à une structure de paroi de cabine disposée sur le côté de la première ou de la seconde toilette de sorte qu'une section d'espace supplémentaire adjacente à la première ou à la seconde porte est fournie, lequel espace supplémentaire est fourni sous forme d'un agrandissement de la toilette commune.

7. Cabine selon la revendication 1 ou 2, dans laquelle, dans la position secondaire, la paroi de séparation est disposée de manière à s'étendre de l'agencement de toilettes vers un monument prévu sur un côté opposé de la zone de couloir;
dans laquelle, pour atteindre la position secondaire, à l'état complètement extrait, la paroi de séparation est mobile par son bord proximal depuis un emplacement situé entre la première et la seconde porte vers un emplacement situé du côté opposé de la première et de la seconde porte; et
dans laquelle, dans la position secondaire, la paroi de séparation est reliée par son extrémité proximale à une partie de l'agencement de toilettes qui est disposée sur un côté latéral de la première ou de la seconde porte de sorte qu'un espace supplémentaire agrandi (42) est fourni devant la première et la seconde porte, séparé d'un couloir ou d'un espace de sièges adjacent, lequel espace supplémentaire est fourni sous forme d'un agrandissement de la toilette commune.

8. Cabine selon la revendication 1, dans laquelle, dans la position secondaire, la paroi de séparation est disposée devant la première ou la seconde porte de toilettes; et
dans laquelle, de préférence, la paroi de séparation comprend deux segments (33, 35) qui sont reliés de manière pliable le long d'un axe vertical (36) pour se plier devant la première ou la seconde porte dans la position secondaire.

9. Cabine selon l'une des revendications précédentes, dans laquelle la paroi de séparation comprend des segments de fermeture extensible sur son bord supérieur; dans laquelle les segments de fermeture peuvent être extraits dans la position secondaire pour fermer l'espace séparé supplémentaire vers le haut.

10. Cabine selon l'une des revendications précédentes, dans laquelle l'au moins une zone de couloir comprend au moins un couloir disposé longitudinalement; et
dans laquelle le premier et le second compartiment de toilettes sont accessibles depuis le couloir.

11. Cabine selon l'une des revendications précédentes, dans laquelle une zone d'entrée est prévue pour être disposée à côté d'une porte d'aéronef; la zone d'entrée comprenant une zone de couloir d'entrée; et
dans laquelle le premier et le second compartiment de toilettes sont accessibles depuis la zone de couloir d'entrée.

12. Aéronef (150), comprenant:
- un fuselage (152); et
- un espace de cabine (154) disposé à l'intérieur du fuselage;
dans lequel il est prévu à l'intérieur de l'espace de cabine une cabine selon l'une des revendications précédentes.

13. Procédé (200) de transformation d'un agencement de toilettes pour une cabine d'aéronef, comprenant les étapes suivantes:
- agencer (202) un agencement de toilettes comprenant un premier compartiment de toilettes accessible depuis une zone de couloir via une première porte, et un second compartiment de toilettes accessible depuis la zone de couloir via une seconde porte; et
- déplacer (204) une paroi de séparation bifonctionnelle disposée entre le premier compartiment de toilettes et le second compartiment de toilettes d'une position primaire, dans laquelle la paroi de séparation bifonctionnelle sépare le premier compartiment de toilettes du second compartiment de toilettes, à une position secondaire;
dans lequel, pour déplacer la paroi de séparation bifonctionnelle, la paroi de séparation bifonctionnelle est libérée puis déplacée pour fournir la toilette agrandie, et ensuite placée dans la zone de couloir où la paroi de séparation est fixée dans la position secondaire;
dans lequel, dans la position secondaire, la paroi de séparation bifonctionnelle est amenée dans une position à l'extérieur des premier et second compartiments de toilettes;
dans lequel, dans la position secondaire, le premier compartiment de toilettes et le second compartiment de toilettes fournissent une toilette commune agrandie; et
dans lequel, dans la position secondaire, la paroi de séparation bifonctionnelle est disposée au moins partiellement à l'extérieur de l'agencement de toilettes et à l'intérieur de la zone de couloir à l'extérieur du premier compartiment de toilettes et du second compartiment de toilettes pour entourer au moins partiellement une partie de la zone de couloir devant l'agencement de toilettes, fournissant un espace séparé supplémentaire sous forme d'un agrandissement de la toilette commune.
